# EUROPEAN PATENT APPLICATION

(11) **EP 2 584 430 A1**
(43) Date of publication of application: **24.04.2013**
(21) Application number: 12175258.8
(22) Date of filing: 06.07.2012
(51) Int. Cl.: G06F 3/01, G06F 3/048

(54) **User interface for electronic device**

(30) Priority: 17.10.2011 US 201161548062 P
(71) Applicant: Research In Motion Limited, Waterloo, ON N2L 3W8 (CA)
(72) Inventor: Eriksson, Marcus, 211 40 Malmö (SE); Wasberger, Emil Alexander, 211 40 Malmö (SE); Hallerström Sjöstedt, Svante Magnus, 211 40 Malmö (SE)
(74) Representative: Finnie, Peter John

(57) **Abstract**

A computer implemented method is performed at an electronic device adapted to receive user input and having a display. The method comprises displaying a subset of a set of items in a first display area of the display, maintaining a first marker corresponding to a position of the currently displayed subset within the set of items, receiving user input to navigate through the set of items, receiving a user initiated indication of an item within the set of items to be allocated a marker, maintaining a second marker corresponding to the position of the indicated item within the set of items, and notifying the user of the position of the indicated item during subsequent navigation through the set of items. An electronic device and computer program product are also provided.

## Description

### Technical Field

The disclosed embodiments relate to an electronic device, and in particular to an electronic device interface, and a method of operation thereof.

### Background of the Invention

The use of user interfaces, such as graphical user interfaces, to interact with electronic devices is widespread. As devices and functionality evolves, users are increasingly demanding improved interactivity with, and access to, the content stored on the device. This is particularly so in the case of portable electronic devices, and also devices having newer forms of input, such as gesture-based input, which have recently become widespread and increasing in popularity.

It is no longer adequate to simply display the content in the manner in which it is stored or input by the user. Users demand ever more interactivity from their devices and content, whether in terms of the simplicity or speed of interaction or the way content is displayed. The present disclosure seeks to provide such increased interactivity, particularly in the context of a user interface.

### Brief Description of the Drawings

Examples of the present invention will now be described in detail with reference to the accompanying drawings, in which:

Figure 1 is a block diagram illustrating an electronic device in accordance with example embodiments of the present disclosure;

Figure 2 is a front view of a smartphone in accordance with example embodiments of the present disclosure;

Figure 3 is a front view of a tablet computer in accordance with example embodiments of the present disclosure;

Figure 4 shows a known exemplary interface for displaying a plurality of items;

Figure 5 shows an interface in accordance with an example embodiment of the present disclosure;

Figures 6A and 6B show an interface in accordance with an example embodiment of the present disclosure;

Figures 7A and 7B show an interface in accordance with an example embodiment of the present disclosure;

Figure 8 shows an interface in accordance with an example embodiment of the present disclosure;

Figure 9 shows a flow chart illustrating an example embodiment of the present disclosure;

Figure 10 shows a flow chart illustrating an example embodiment of the present disclosure; and,

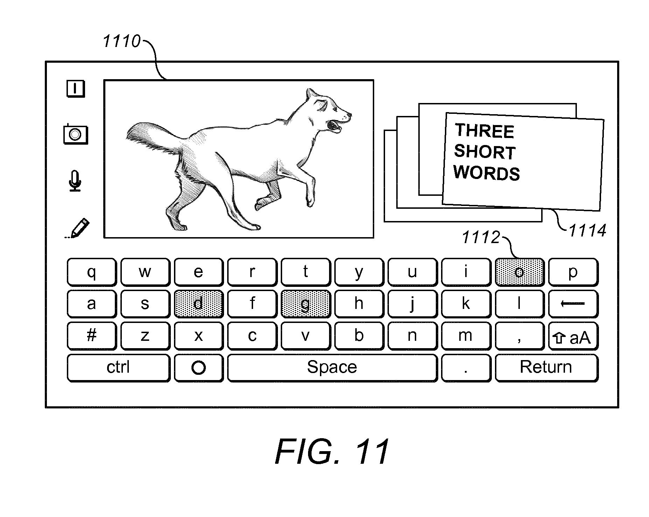

Figure 11 shows an interface in accordance with an example embodiment of the present disclosure.

### Description of Embodiments

Embodiments set out in this application relate generally to a method of interacting with a set of items on a user interface, such as a Graphical User Interface (GUI), on an electronic device, including, but not limited, to a portable electronic device. Embodiments may facilitate user interaction with the electronic device to quickly and easily highlight and identify items of value in a list and quickly and easily view those items from a vast array of items when scrolling. Some embodiments relate to different forms of user input, including newer forms of user input such as gesture-based or speech-based.

In accordance with one embodiment, a computer implemented method is provided comprising, at an electronic device adapted to receive user input and having a display:
displaying a subset of a set of items in a first display area of the display;
maintaining a first marker corresponding to a position of the currently displayed subset within the set of items;
receiving user input to navigate through the set of items;
receiving a user initiated indication of an item within the set of items to be allocated a marker;
maintaining a second marker corresponding to the position of the indicated item within the set of items; and,
notifying the user of the position of the indicated item during subsequent navigation through the set of items.

In certain embodiments notifying comprises displaying the second marker in a second display area of the display. In certain embodiments notifying further comprises displaying the first marker in the second display area of the display. In certain embodiments notifying comprises providing a non-visual indicator as the first marker approaches the position of the second marker during navigation. In certain embodiments the non-visual indication comprises an audible sound. In certain embodiments the non-visual indication comprises haptic feedback.

In certain embodiments the subset of items is displayed in a structured list on the first display area of the display. In certain embodiments the structured list is displayed as a grid.

In certain embodiments the method further comprises: displaying, in a second display area of said display, a visual representation of at least a plurality of items in the set of items, including the subset of items currently displayed, said visual representation having a physical extent representing said at least a plurality of items; and, displaying on the visual representation the first and second markers corresponding, respectively, to the position of the currently displayed subset and the position of the indicated item within the set of items on the visual representation. In certain embodiments the visual representation is a scroll bar.

In certain embodiments the method further comprises: receiving user input selecting the second marker; navigating to the item associated with the second marker; and, displaying a subset of items from the set of items, said subset of items including the item associated with the second marker.

In certain embodiments the user input is a gesture on a touch pad of the electronic device. In certain embodiments the touch pad is provided as a touch-sensitive overlay on the display screen, thus providing a touch-sensitive screen. In certain embodiments the gesture is a momentary, substantially single-position contact with the touch pad. In certain embodiments the user input is a gesture detected by a camera of the electronic device. Other types of sensors may be employed to detect the gesture, including, but not limited to, infra-red (IR) sensors and gyroscopic sensors.

In certain embodiments the method comprises displaying a plurality of markers on the visual representation at positions corresponding to positions within the set of items of a plurality of items in the list. In certain embodiments said plurality of items comprises items in the set associated with a higher importance than other items in the list. In certain embodiments said plurality of items comprises items in the set assigned a favourite status. In certain embodiments said plurality of items comprises items in the set associated with a particular module of the device. In some embodiments said plurality of items might relate to items not yet accessed by the user, such as unopened mail or messages.

In certain embodiments the method further comprises: receiving a user input to navigate through the set of items, said user input comprising a gesture which comprises a movement across at least a portion of an input region; associating said movement gesture with a translational movement of the first marker along the visual representation to a new position; adjusting the amount of translational movement of the first marker along the visual representation according to a separation of the first and second markers; and, displaying another subset of items from the set of items corresponding to the new position of the first marker.

In certain embodiments the amount of translational movement of the first marker along the visual representation is determined by a characteristic of said gesture. In certain embodiments said characteristic is a physical extent of said movement gesture. In certain embodiments said characteristic is a speed of said movement gesture. In certain embodiments wherein said movement gesture corresponds to a first proportion of the physical extent of said visual representation and said translational movement of said first marker corresponds to a second proportion of the physical extent of said visual representation, said second proportion being different than said first proportion. In certain embodiments, if the separation of the first and second markers on the visual representation is less than a predetermined proportion of the physical extent of the visual representation, said second proportion is less than said first proportion. In certain embodiments said second proportion is less than or equal to half of said first proportion. In certain embodiments, if the separation of the first and second markers on the visual representation is greater than a predetermined proportion of the physical extent of the visual representation, said second proportion is greater than said first proportion. In certain embodiments said second proportion is greater than or equal to twice said first proportion.

In accordance with one embodiment, an electronic device is provided comprising: a display; an input device for receiving user input; one or more processors; and, memory comprising instructions which when executed by one or more of the processors cause the electronic device to: display a subset of a set of items in a first display area of the display; maintain a first marker corresponding to a position of the currently displayed subset within the set of items; receive user input to navigate through the set of items; receive a user initiated indication of an item within the set of items to be allocated a marker; maintain a second marker corresponding to the position of the indicated item within the set of items; and, notify the user of the position of the indicated item during subsequent navigation through the set of items. In other embodiments the memory comprises instructions which when executed by the one or more of the processors cause the electronic device to operate as described in preceding paragraphs.

In certain embodiments the input device is a touch pad of the electronic device. In certain embodiments the display is a display screen and wherein the touch pad is provided as a touch-sensitive overlay on the display screen, thus providing a touch-sensitive screen. In certain embodiments the input device is a camera of the electronic device. In certain embodiments the input device is an optical image detector connected to the electronic device.

In accordance with one embodiment a computer program product is provided comprising memory comprising instructions which when executed by one or more of the processors of an electronic device adapted to receive user input and having a display cause the electronic device to: display a subset of a set of items in a first display area of the display; maintain a first marker corresponding to a position of the currently displayed subset within the set of items; receive user input to navigate through the set of items; receive a user initiated indication of an item within the set of items to be allocated a marker; maintain a second marker corresponding to the position of the indicated item within the set of items; and, notify the user of the position of the indicated item during subsequent navigation through the set of items. In other embodiments the computer program product is provided comprising memory comprising instructions which when executed by the one or more of the processors cause the electronic device to operate as described in preceding paragraphs.

The disclosure generally relates to an electronic device, which, in embodiments described herein, utilises gesture based inputs. Although the present disclosure is described in the context of a portable electronic device having a touchscreen, it will be understood that any motion sensitive or motion detecting electronic device may be used to implement the principles described in the present disclosure. For example, a camera or infrared sensor assembly adapted to capture hand or body movement may be used to detect an input gesture to a portable or non-portable electronic device. Other examples are of course envisaged.

As mentioned above, the present disclosure is described in the context of a portable electronic device. Examples of portable electronic devices include mobile, or handheld, wireless communication devices such as pagers, cellular phones, cellular smart-phones, wireless organizers, personal digital assistants, wirelessly enabled notebook computers, wirelessly enabled tablet computers and so forth. The portable electronic device may also be a portable electronic device without wireless communication capabilities, such as a handheld electronic game device, digital photograph album, tablet computer, digital camera, or other device.

### Example Electronic Device

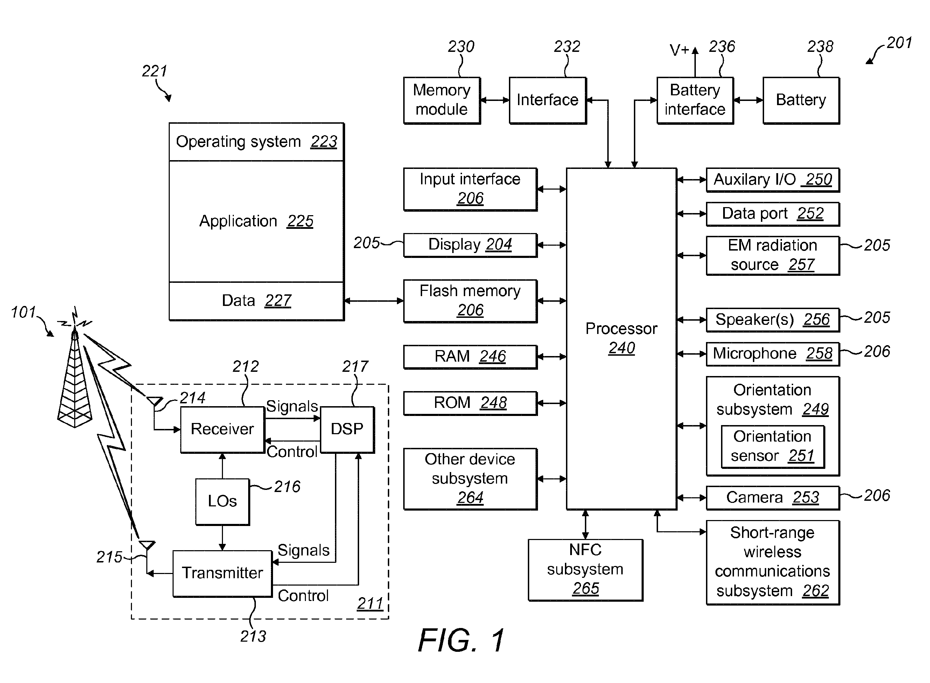

Reference will now be made to Fig. 1 which illustrates an example electronic device 201 in which example embodiments described in the present disclosure can be applied. It will be appreciated that one or more of the electronic devices 201 suitable for use with the present disclosure may be of a type which differs from the electronic device 201 of Fig. 1 and that some of the features, systems or subsystems of the electronic device 201 discussed below with reference to Fig. 1 may be omitted from electronic devices 201 which implement the principles of the present disclosure.

In the illustrated example embodiment, the electronic device 201 is a communication device and, more particularly, is a mobile communication device having data and voice communication capabilities, and the capability to communicate with other computer systems; for example, via the Internet. It will, however, be appreciated that the electronic device 201 may take other forms, including any one of the forms listed above.

Depending on the functionality provided by the electronic device 201, in various example embodiments the electronic device 201 may be a multiple-mode communication device configured for both data and voice communication, a mobile telephone, such as a smartphone, a wearable computers such as a watch, a tablet computer such as a slate computer, a personal digital assistant (PDA), or a computer system. The electronic device 201 may take other forms apart from those specifically listed above. The electronic device may also be referred to as a mobile communications device, a communication device, a mobile device and, in some cases, as a device.

The electronic device 201 includes a controller including one or more processor 240 (such as a microprocessor) which controls the overall operation of the electronic device 201. The processor 240 interacts with device subsystems such as a wireless communication subsystem 211 for exchanging radio frequency signals with a wireless network 101 to perform communication functions. The processor 240 is communicably coupled with additional device subsystems including one or more output interfaces 205 (such as a display 204 and/or a speaker 256 and/or electromagnetic (EM) radiation source 257), one or more input interfaces 206 (such as a camera 253, microphone 258, keyboard (not shown), control buttons (not shown), a navigational input device (not shown), and/or a touch-sensitive overlay (not shown)) associated with a touchscreen display 204, an orientation subsystem 249, memory (such as flash memory 244, random access memory (RAM) 246, read only memory (ROM) 248, etc.), auxiliary input/output (I/O) subsystems 250, a data port 252 (which may be a serial data port, such as a Universal Serial Bus (USB) data port), a near field communications (NFC) subsystem 265, a short-range communication subsystem 262 and other device subsystems generally designated as 264. Some of the subsystems shown in Fig. 1 perform communication-related functions, whereas other subsystems may provide "resident" or on-device functions.

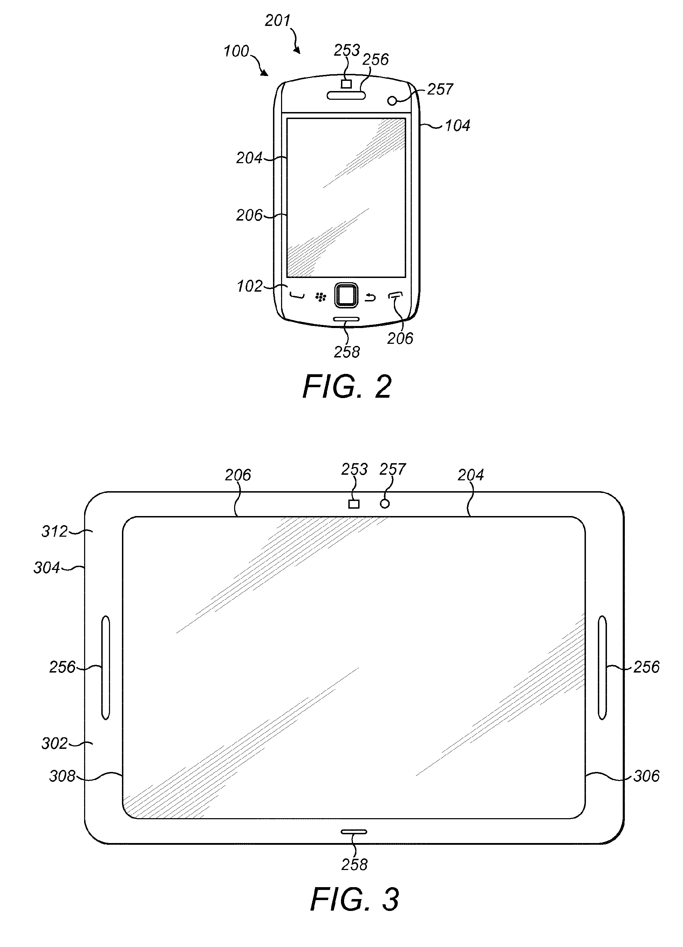

In at least some example embodiments, the electronic device 201 may include a touchscreen display which acts as both an input interface 206 (i.e. touch-sensitive overlay) and an output interface 205 (i.e. display). The touchscreen display may be constructed using a touch-sensitive input surface which is connected to an electronic controller and which overlays the display 204. The touch-sensitive overlay and the electronic controller provide a touch-sensitive input interface 206 and the processor 240 interacts with the touch-sensitive overlay via the electronic controller. In at least some example embodiments, the touch-sensitive overlay may have a touch-sensitive input surface which is larger than the display 204. For example, in at least some example embodiments, the touch-sensitive overlay may extend overtop of a frame 312 (Fig. 3) which surrounds the display 204. In such example embodiments, the frame 312 (Fig. 3) may be referred to as an active frame since it is capable of acting as an input interface 206. In at least some example embodiments, the touch-sensitive overlay may extend to the sides of the electronic device 201.

As noted above, in some example embodiments, the electronic device 201 may include a communication subsystem 211 which allows the electronic device 201 to communicate over a wireless network 101. The communication subsystem 211 includes a receiver 212, a transmitter 213, and associated components, such as one or more antenna elements 214 and 215, local oscillators (LOs) 216, and a processing module such as a digital signal processor (DSP) 217. The antenna elements 214 and 215 may be embedded or internal to the electronic device 201 and a single antenna may be shared by both receiver and transmitter. The particular design of the wireless communication subsystem 211 depends on the wireless network 101 in which electronic device 201 is intended to operate.

In at least some example embodiments, the electronic device 201 may communicate with any one of a plurality of fixed transceiver base stations of the wireless network 101 within its geographic coverage area. The electronic device 201 may send and receive communication signals over the wireless network 101 after the required network registration or activation procedures have been completed. Signals received by the antenna 214 through the wireless network 101 are input to the receiver 212, which may perform such common receiver functions as signal amplification, frequency down conversion, filtering, channel selection, etc., as well as analogue-to-digital (A/D) conversion. A/D conversion of a received signal allows more complex communication functions such as demodulation and decoding to be performed in the DSP 217. In a similar manner, signals to be transmitted are processed, including modulation and encoding, for example, by the DSP 217. These DSP-processed signals are input to the transmitter 213 for digital-to-analogue (D/A) conversion, frequency up conversion, filtering, amplification, and transmission to the wireless network 101 via the antenna 215. The DSP 217 not only processes communication signals, but may also provide for receiver and transmitter control. For example, the gains applied to communication signals in the receiver 212 and the transmitter 213 may be adaptively controlled through automatic gain control algorithms implemented in the DSP 217.

In some example embodiments, the auxiliary input/output (I/O) subsystems 250 may include an external communication link or interface; for example, an Ethernet connection. The electronic device 201 may include other wireless communication interfaces for communicating with other types of wireless networks; for example, a wireless network such as an orthogonal frequency division multiplexed (OFDM) network. The auxiliary I/O subsystems 250 may include a vibrator for providing vibratory notifications in response to various events on the electronic device 201 such as receipt of an electronic communication or incoming phone call, or for other purposes such as haptic feedback (touch feedback).

In some example embodiments, the electronic device 201 also includes a removable memory module 230 (typically including flash memory, such as a removable memory card) and a memory interface 232. Network access may be associated with a subscriber or user of the electronic device 201 via the memory module 230, which may be a Subscriber Identity Module (SIM) card for use in a GSM network or other type of memory card for use in the relevant wireless network type. The memory module 230 is inserted in or connected to the memory card interface 232 of the electronic device 201 in order to operate in conjunction with the wireless network 101.

The data port 252 may be used for synchronization with a user's host computer system (not shown). The data port 252 enables a user to set preferences through an external device or software application and extends the capabilities of the electronic device 201 by providing for information or software downloads to the electronic device 201 other than through the wireless network 101. The alternate download path may for example, be used to load an encryption key onto the electronic device 201 through a direct, reliable and trusted connection to thereby provide secure device communication.

In at least some example embodiments, the electronic device 201 also includes a device orientation subsystem 249 including at least one orientation sensor 251 which is connected to the processor 240 and which is controlled by one or a combination of a monitoring circuit and operating software. The orientation sensor 251 detects the orientation of the device 201 or information from which the orientation of the device 201 can be determined, such as acceleration. In some example embodiments, the orientation sensor 251 is an accelerometer, such as a three-axis accelerometer. An accelerometer is a sensor which converts acceleration from motion (e.g. movement of the device 201 or a portion thereof due to the strike force) and gravity which are detected by a sensing element into an electrical signal (producing a corresponding change in output). Accelerometers may be available in one, two or three axis configurations. Higher order axis configurations are also possible. Accelerometers may produce digital or analogue output signals depending on the type of accelerometer.

An orientation sensor 251 may generate orientation data which specifies the orientation of the electronic device 201. The orientation data, in at least some example embodiments, specifies the orientation of the device 201 relative to the gravitational field of the earth.

In some example embodiments, the orientation subsystem 249 may include other orientation sensors 251, instead of or in addition to accelerometers. For example, in various example embodiments, the orientation subsystem 249 may include a gravity sensor, a gyroscope, a tilt sensor, an electronic compass or other suitable sensor, or combinations thereof. In some example embodiments, the device orientation subsystem 249 may include two or more orientation sensors 251 such as an accelerometer and an electronic compass.

The electronic device 201 may, in at least some example embodiments, include a near field communications (NFC) subsystem 265. The NFC subsystem 265 is configured to communicate with other electronic devices 201 and/or tags, using an NFC communications protocol. NFC is a set of short-range wireless technologies which typically require a distance of 4 cm or less for communications. The NFC subsystem 265 may include an NFC chip and an NFC antenna.

The electronic device 201 may include a microphone and/or one or more speakers. In at least some example embodiments, an electronic device 201 may include a plurality of speakers 256. For example, in some example embodiments, the electronic device 201 may include two or more speakers 265. The two or more speakers 256 may, for example, be disposed in spaced relation to one another. That is, in at least some example embodiments, the electronic device 201 may include a first speaker and a second speaker and the first speaker and the second speaker may be spatially separated from one another within the electronic device 201. In at least some example embodiments, the display 204 may be disposed between the first speaker and the second speaker of the electronic device. In such example embodiments, the first speaker may be located at one side of the display 204 and the second speaker may be located at another side of the display which is opposite the side of the display where the first speaker is located. For example, the first speaker may be disposed at a left side of the display and the second speaker may be disposed at a right side of the display.

In at least some example embodiments, each speaker 256 may be associated with a separate audio channel. The multiple speakers may, for example, be used to provide stereophonic sound (which may also be referred to as stereo).

The electronic device 201 may also include one or more cameras 253. The one or more cameras 253 may be capable of capturing images in the form of still photographs or motion video.

In at least some example embodiments, the electronic device 201 includes a front facing camera 253. A front facing camera is a camera which is generally located on a front face of the electronic device 201. The front face is typically the face on which a display 204 is mounted. That is, the display 204 is configured to display content which may be viewed from a side of the electronic device 201 where the camera 253 is directed. The front facing camera 253 may be located anywhere on the front surface of the electronic device; for example, the camera 253 may be located above or below the display 204. The camera 253 may be a fixed position camera which is not movable relative to the display 204 of the electronic device 201 and/or the housing of the electronic device 201. In such example embodiments, the direction of capture of the camera is always predictable relative to the display 204 and/or the housing. In at least some example embodiments, the camera may be provided in a central location relative to the display 204 to facilitate image acquisition of a face.

In at least some example embodiments, the electronic device 201 includes an electromagnetic (EM) radiation source 257. In at least some example embodiments, the EM radiation source 257 is configured to emit electromagnetic radiation from the side of the electronic device which is associated with a camera 253 of that electronic device 201. For example, where the camera is a front facing camera 253, the electronic device 201 may be configured to emit electromagnetic radiation from the front face of the electronic device 201. That is, in at least some example embodiments, the electromagnetic radiation source 257 is configured to emit radiation in a direction which may visible by the camera. That is, the camera 253 and the electromagnetic radiation source 257 may be disposed on the electronic device 201 so that electromagnetic radiation emitted by the electromagnetic radiation source 257 is visible in images obtained by the camera.

In some example embodiments, the electromagnetic radiation source 257 may be an infrared (IR) radiation source which is configured to emit infrared radiation. In at least some example embodiments, the electromagnetic radiation source 257 may be configured to emit radiation which is not part of the visible spectrum. The camera 253 may be a camera which is configured to capture radiation of the type emitted by the electromagnetic radiation source 257. Accordingly, in at least some example embodiments, the camera 253 is configured to capture at least some electromagnetic radiation which is not in the visible spectrum.

In some example embodiments, the electronic device 201 is provided with a service routing application programming interface (API) which provides an application with the ability to route traffic through a serial data (i.e., USB) or Bluetooth® (Bluetooth® is a registered trademark of Bluetooth SIG, Inc.) connection to a host computer system using standard connectivity protocols. When a user connects their electronic device 201 to the host computer system via a USB cable or Bluetooth® connection, traffic that was destined for the wireless network 101 is automatically routed to the electronic device 201 using the USB cable or Bluetooth® connection. Similarly, any traffic destined for the wireless network 101 is automatically sent over the USB cable Bluetooth® connection to the host computer system for processing.

The electronic device 201 also includes a battery 238 as a power source, which is typically one or more rechargeable batteries that may be charged for example, through charging circuitry coupled to a battery interface 236 such as the data port 252. The battery 238 provides electrical power to at least some of the electrical circuitry in the electronic device 201, and the battery interface 236 provides a mechanical and electrical connection for the battery 238. The battery interface 236 is coupled to a regulator (not shown) which provides power V+ to the circuitry of the electronic device 201.

The electronic device 201 includes a short-range communication subsystem 262 which provides for wireless communication between the electronic device 201 and other electronic devices 201. The short-range communication subsystem 262 may be used to provide a common user interface (UI) mode between the electronic device 201 and another electronic device 201 which may, in at least some example embodiments, be an electronic device 201 which is the same or similar to the electronic device 201 discussed with reference to Fig. 1. In at least some example embodiments, the short-range communication subsystem 262 is a wireless bus protocol compliant communication mechanism such as a Bluetooth® communication module to provide for communication with similarly-enabled systems and devices.

The electronic device 201 stores data 227 in an erasable persistent memory, which in one example embodiment is the flash memory 244. In various example embodiments, the data 227 includes service data including information required by the electronic device 201 to establish and maintain communication with the wireless network 101. The data 227 may also include user application data such as email messages, address book and contact information, calendar and schedule information, notepad documents, image files, and other commonly stored user information stored on the electronic device 201 by its user, and other data. The data 227 stored in the persistent memory (e.g. flash memory 244) of the electronic device 201 may be organized, at least partially, into one or more databases or data stores. The databases or data stores may contain data items of the same data type or associated with the same application. For example, email messages, contact records, and task items may be stored in individual databases within the device memory.

The electronic device 201 may, in some example embodiments, be a mobile communication device which may provide two principal modes of communication: a data communication mode and a voice communication mode. In the data communication mode, a received data signal such as a text message, an email message, or Web page download will be processed by the communication subsystem 211 and input to the processor 240 for further processing. For example, a downloaded Web page may be further processed by a browser application or an email message may be processed by an email messaging application and output to the display 204. A user of the electronic device 201 may also compose data items, such as email messages; for example, using the input devices in conjunction with the display 204. These composed items may be transmitted through the communication subsystem 211 over the wireless network 101.

In the voice communication mode, the electronic device 201 provides telephony functions and operates as a typical cellular phone. The overall operation is similar, except that the received signals would be output to the speaker 256 and signals for transmission would be generated by a transducer such as the microphone 258. The telephony functions are provided by a combination of software/firmware (i.e., a voice communication module) and hardware (i.e., the microphone 258, the speaker 256 and input interfaces 206). Alternative voice or audio I/O subsystems, such as a voice message recording subsystem, may also be implemented on the electronic device 201. Although voice or audio signal output is typically accomplished primarily through the speaker 256, the display screen 204 may also be used to provide an indication of the identity of a calling party, duration of a voice call, or other voice call related information.

The processor 240 operates under stored program control and executes software modules 221 stored in memory such as persistent memory; for example, in the flash memory 244. As illustrated in Fig. 1, the software modules 221 include operating system software 223 and other software applications 225

The software applications 225 on the electronic device 201 may also include a range of additional applications, including for example, a notepad application, Internet browser application, voice communication (i.e. telephony) application, mapping application, or a media player application, or any combination thereof. Each of the software applications 225 may include layout information defining the placement of particular fields and graphic elements (e.g. text fields, input fields, icons, etc.) in the user interface (e.g. the display 204) according to the application.

The software modules 221 or parts thereof may be temporarily loaded into volatile memory such as the RAM 246. The RAM 246 is used for storing runtime data variables and other types of data or information, as will be apparent to those skilled in the art. Although specific functions are described for various types of memory, this is merely one example, and those skilled in the art will appreciate that a different assignment of functions to types of memory could also be used.

A predetermined set of applications that control basic device operations, including data and possibly voice communication applications will normally be installed on the electronic device 201 during or after manufacture. Additional applications and/or upgrades to the operating system 223 or software applications 225 may also be loaded onto the electronic device 201 through the wireless network 101, the auxiliary I/O subsystem 250, the data port 252, the short-range communication subsystem 262, or other suitable subsystem 264. The downloaded programs or code modules may be permanently installed; for example, written into the program memory (i.e. the flash memory 244), or written into and executed from the RAM 246 for execution by the processor 240 at runtime.

### Example Smartphone Electronic Device

As discussed above, electronic devices 201 may take a variety of forms. For example, in at least some example embodiments, one or more of the electronic devices which are configured to enter a common user interface mode with another electronic device may be a smartphone.

Referring now to Fig. 2, a front view of an example electronic device 201 which is a smartphone 100 is illustrated. The smartphone 100 is a mobile phone which offers more advanced computing capability than a basic non-smartphone cellular phone. For example, the smartphone 100 may have the ability to run third party applications which are stored on the smartphone.

The smartphone 100 may include the components discussed above with reference to Fig. 1 or a subset of those components. The smartphone 100 includes a housing 104 which houses at least some of the components discussed above with reference to Fig. 1.

In the example embodiment illustrated, the smartphone includes a display 204, which may be a touchscreen display which acts as an input interface 206. The display 204 is disposed within the smartphone 100 so that it is viewable at a front side 102 of the smartphone 100. That is, a viewable side of the display 204 is disposed on the front side 102 of the smartphone. In the example embodiment illustrated, the display 204 is framed by the housing 104.

The example smartphone 100 also includes other input interfaces 206 such as one or more buttons, keys or navigational input mechanisms. In the example illustrated, at least some of these additional input interfaces 206 are disposed for actuation at a front side 102 of the smartphone.

The example smartphone also includes a speaker 256. In the example embodiment illustrated, the smartphone includes a single speaker 256 which is disposed vertically above the display 204 when the smartphone 100 is held in a portrait orientation where its height is longer than its width. The speaker 256 may be disposed on the front face of the smartphone 100.

While the example smartphone 100 of Fig. 2 includes a single speaker 256, in other example embodiments, the smartphone 100 may include a greater number of speakers 256. For example, in at least some example embodiments, the smartphone 100 may include a second speaker 256 which is disposed vertically below the display 204 when the smartphone is held in a portrait orientation where its height is longer than its width (i.e. the orientation illustrated in Fig. 2).

The example smartphone 100 also includes a microphone 258. In the example illustrated, the microphone 258 is vertically disposed below the display 204 when the smartphone is held in the portrait orientation. The microphone 258 and at least one speaker 256 may be arranged so that the microphone is in close proximity to a user's mouth and the speaker 256 is in close proximity to a user's ear when the user holds the phone to their face to converse on the smartphone.

The example smartphone 100 also includes a front facing camera 253 which may be located vertically above the display 204 when the smartphone 100 is held in a portrait orientation where its height is longer than its width. The front facing camera 253 is located so that it may capture images of objects which are located in front of and/or surrounding the front side of the smartphone 100.

The example smartphone 100 also includes an electromagnetic radiation source 257. The electromagnetic radiation source 257 is disposed on the front side 102 of the smartphone 100. In this orientation, electromagnetic radiation which is produced by the electromagnetic radiation source 257 may be projected onto objects which are located in front of and/or surrounding the front side of the smartphone 100. Such electromagnetic radiation (or the projection of electromagnetic radiation onto objects) may be captured on images obtained by the camera 253.

### Example Tablet Electronic Device

In at least some example embodiments, the one or more of the electronic devices 201 may be a tablet computer. Referring now to Fig. 3, a front view of an example electronic device 201 which is a tablet computer 300 is illustrated.

The tablet computer 300 of Fig. 3 may include many of the same features and components of the smartphone 100 of Fig. 2. However, the tablet computer 300 of Fig. 3 is generally larger than the smartphone 100 of Fig. 2. The tablet computer 300 may include the components discussed above with reference to Fig. 1 or a subset of those components. The tablet computer 300 includes a housing 304 which houses at least some of the components discussed above with reference to Fig. 1.

The tablet computer 300 includes a display 204, which may be a touchscreen display which acts as an input interface 206. The display 204 is disposed within the tablet computer 300 so that it is viewable at a front side 302 of the tablet computer 300. That is, a viewable side of the display 204 is disposed on the front side 302 of the tablet computer 300. In the example embodiment illustrated, the display 204 is framed by the housing 304.

A frame 312 surrounds the display 204. The frame 312 is portion of the housing 304 which provides a border around the display 204. In at least some example embodiments, the frame 312 is an active frame 312. That is, the frame has a touch sensitive overlay which allows the electronic device 201 to detect a touch applied to the frame thus allowing the frame 312 to act as an input interface 206 (Fig. 1).

The example tablet computer 300 includes a plurality of speakers 256. In the example embodiment illustrated, the tablet includes two speakers 256. The two speakers 256 are disposed on opposing sides of the display 204. More particularly, when the tablet computer 300 is held in a landscape orientation (such as the orientation illustrated in Fig. 3) where its width is longer than its height, one of the two speakers is disposed on a right side 306 of the display 204 and one of the speakers is disposed on the left side 308 of the display 204. Both speakers 256 are disposed on the front side 302 of the tablet computer 300.

The example tablet computer 300 also includes a microphone 258. In the example illustrated, the microphone 258 is vertically disposed below the display 204 when the tablet computer is held in the landscape orientation illustrated in Fig. 3. The microphone 258 may be located in other locations in other example embodiments.

The example tablet computer 300 also includes a front facing camera 253 which may be located vertically above the display 204 when the tablet computer 300 is held in a landscape orientation (i.e. the orientation of Fig. 3). The front facing camera 253 is located so that it may capture images of objects which are located in front of and/or surrounding the front side of the tablet computer 300.

The example tablet computer 300 also includes an electromagnetic radiation source 257. The electromagnetic radiation source 257 is disposed on the front side 304 of the tablet computer 300. In this orientation, electromagnetic radiation which is produced by the electromagnetic radiation source 257 may be projected onto objects which are located in front of and/or surrounding the front side 302 of the tablet computer 300. Such electromagnetic radiation (or the projection of electromagnetic radiation onto objects) may be captured on images obtained by the camera 253.

In some example embodiments, one or more touches also known as touch contacts or touch events, may be detected by the input interface 204, in one example touch-sensitive display screen and the touch-sensitive frame area. Multiple simultaneous touches may be detected. The processor 240 may determine attributes of the touch, including a location of a touch, and may monitor any movement of the touch. Touch location and movement data may include an area of contact or a single point of contact, such as a point at or near a centre of the area of contact. The location of a detected touch may include x and y components, e.g., horizontal and vertical components, respectively. Certain touches or combinations of touches are recognised as gestures that lead to certain manipulations or operations of the GUI or of the information presented on the display screen 204. By performing certain gestures on the input detectable area, a user can interact with the GUI and control the applications and operating system of the electronic device. It will be appreciated that, although the present disclosure describes the use of gestures, gesture based input may not be required to implement the principles of some embodiments of the present disclosure.

### Example Gestures

Exemplary gestures include: swipe, flick, pinch, punch or un-pinch, long-press, rotate, grab, tap or any of the above using multiple touch points, for example, a swipe may be performed with multiple fingers on a portable touch sensitive device. A sample of these exemplary gestures will now be described. The list of exemplary gestures given above and below is clearly not exhaustive.

Swipe - an exemplary swipe movement may be a substantially horizontal movement of the input object maintaining contact with the detection surface, or while maintaining a similar distance away from the detection point.

Flick - an exemplary flick movement may be similar in nature to a swipe gesture, i.e. substantially horizontal. A flick gesture is often faster than a swipe and involves the input object being moved progressively away from the detection point during the horizontal movement, often at high speed.

Pinch - an exemplary pinch is a multi-point event comprising two distinct input objects starting substantially apart and moving progressively toward one another, i.e. two opposing translational movements.

Punch or un-pinch - an exemplary punch or un-pinch is a multi-point event comprising two distinct input objects starting substantially close or together and moving progressively apart.

Long-press - an exemplary long-press is an input object held for a prolonged period of time at a particular point.

Rotate - an exemplary rotate is a multi-point event comprising a first input object fixed in a particular location while a second input object moves in a substantially circular manner around the first input object.

Grab - an exemplary grab is a multi-point event comprising at least three input objects starting substantially apart and moving progressively toward one another.

Tap - an exemplary tap is an input object moved quickly toward and away from the detection point.

Other gestures are of course envisaged.

### Example Interface

As described above, in some example embodiments, one or more of the electronic devices may be equipped in an active frame 312. A frame is a portion of the housing of the electronic device 201 which frames the display 204 of the electronic device 201. An active frame 312 is a frame which has a touch sensitive overlay which allows the electronic device 201 to detect a touch applied to the frame. An active frame 312 may be useful in detecting large swiping gestures.

Although the description herein and accompanying Figures illustrate animation and movement in relation to a substantially horizontal direction of the landscape-view display area only, embodiments in which analogous animation and movement in the perpendicular direction and indeed, any other direction, are also possible. Similarly, although the description herein and accompanying Figures illustrate a two-dimensional interface, the disclosed principles equally apply to three-dimensional interfaces.

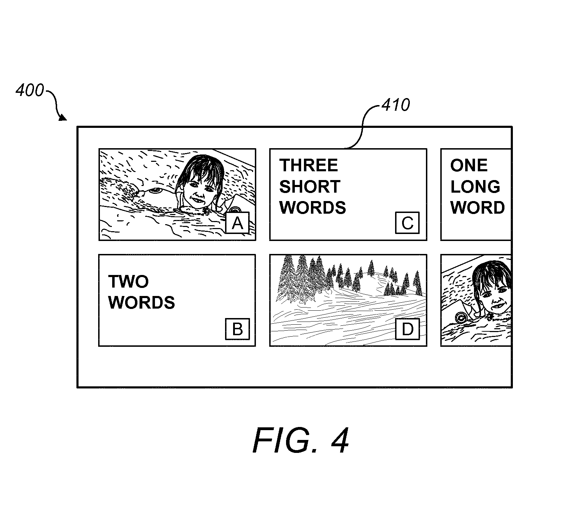

Figure 4 shows an example of an arrangement of items on a Graphical User Interface (GUI) of an electronic device. The items are structured to be displayed in a particular order. As is common in such interfaces, a subset of items is displayed from a larger set. In this example, the items are notes, photos, videos, documents or the like; however, it will be understood that the items may be of any type.

There is no restriction on the ordering of the items when displayed and sorted. Example sorting methods include date modified, date stored, date sent, title, and item type. Other examples are of course contemplated. The items may be stored according to these sorting criteria or merely displayed. The items may also be filtered prior to display.

The items will often be displayed in a list having some structure in terms of how the items grouped or positioned relative to one another. Figure 4 shows a subset of items 410 displayed in a grid-like manner 400. However, any type of method for displaying a subset of items in a structured list of items is particularly suitable for use with the principles of the present disclosure. For example, a vertical list of titles or item details, such as title and date modified, may used to provide an indication of the content of the item. It is not necessary for the items to be displayed in a grid.

### Example timeline bookmarking

It has long been known to provide a scrollbar along a side of a list of items to display a varying subset of the items. Typically, the scrollbar is positioned vertically or horizontally depending on the intended direction of movement of the subset of items. A visual indicator is often provided on the scrollbar that indicates the location of an item displayed in the subset or the location of the entire subset within the structured list of items. For convenience, this location will be referred to as 'the position along the scrollbar', and corresponds to the currently displayed item or items. There is no restriction on the form this visual indicator may take; it merely indicates position of an item in the list of items along the scrollbar or timeline.

Scrollbars are intrinsically linked to the set of items they represent. By manipulating a scrollbar or the visual indicator representing position along the scrollbar, the subset of items which is displayed from within the entire set is also manipulated; commonly to a corresponding degree. For example, if the position along the scrollbar is manipulated by a fixed amount, say 50 pixels, the corresponding set of items will move by a set ratio. Further, the ratio could be 2:1 and the list of items will shift by 100 pixels displaying a different subset of items or a different proportion of the same subset of items depending on the size of the items in the display or grid.

Typically, in gesture-based input devices, a swipe gesture is used to manipulate the position along the scrollbar. The length or speed of the swipe corresponds to the distance the user wishes the position along the scrollbar to move, i.e. the subset of items to be displayed. The swipe may begin at the location on the scrollbar of the visual indicator or may begin anywhere on the input permissible area, i.e. the touch sensitive screen or touch sensitive frame. A flick gesture may be used to indicate that the position along the scrollbar should move quickly and then retard, again by a distance and speed according to the length and speed of the flick gesture. A tap gesture at a location on the scrollbar will typically cause the position along the scrollbar to jump to that location and cause the displayed items to then correspond to the subset of items at that location in the list. A grab gesture may expand the amount of items displayed, i.e. expand the subset of items surrounding the location in the list set by the position of the scrollbar. Other gestures may be used for this purpose.

Within a list, it has often been the case that some items may be considered more important or more valuable than others, either to the user or the machine. Alternatively, a set location within the list may have a particular meaning. For example in a large block of text, bookmarks are conventionally used to mark a location within the text. This may be either to indicate a key point, such as a chapter or verse, or to indicate a last read location. Bookmarks are conventionally used within novels to perform this function. Conventional computer scrollbars and timelines provide no indication of such places of value or note within sets of items.

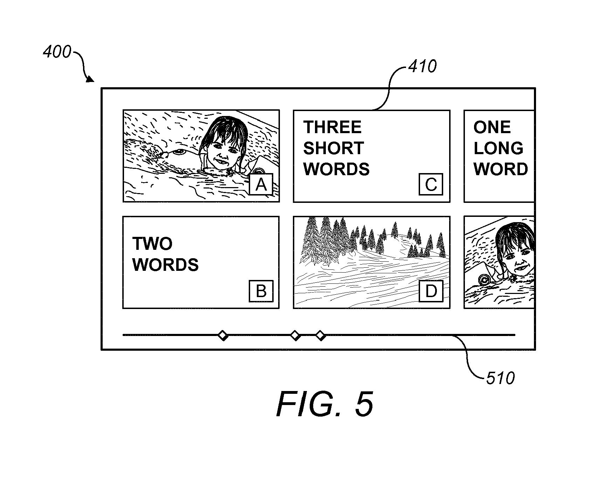

When scrolling through a grid of items it can be difficult to see where the places of interest are within the list; particularly if the scrolling is done at speed or using gesture input where detailed accuracy is not always guaranteed. Figure 5 shows an example of a scroll bar 510 according to the present disclosure. Bookmarks or locations can be placed within the structured list of items by the user, content creator or algorithmically.

An example of a method of noting a location within a list corresponding to an item of value or importance is described in detail below. The scrollbar 510 of the present disclosure highlights such locations with a visual indicator on the scrollbar (or timeline) 510. In this way, the scrollbar 510 provides a clear indication of proximity to locations of items within the list of value. The specific locations of items of value may be stored with the list of items, i.e. each item may be associated with a particular value. Alternatively or additionally, the information may be stored associated with the scrollbar 510. A visual indication is particularly advantageous in a gesture based environment and environments where limited information can be viewed, such as small screen 'real-estate' applications, including on tablet computers and mobile devices.

The scrollbar 510 can act as a handle for faster scrolling, since it is often used to move the list faster than direct input of touch. However, it can also serve as a timeline for where the important items in the list are located.

Advantageously, when using the scrollbar 510 to display a varying subset of information, the user could 'tap' the scrollbar 510 in the proximity of the visual indicator of an important location. When this gesture has been detected, the subset of items at that location will be displayed on the interface, i.e. the gesture will make the position along scrollbar jump to a specific point in the structured list for display. When the visual indicator for the bookmark or location is tapped, the subset of items displayed on the display will quickly move to that subset of items substantially centred on the important item corresponding to the bookmark.

Additionally, if the user were to manipulate the list of items or position along the scrollbar (either using a gesture on the scrollbar 510 or the items themselves) in such a way that the subset of items manoeuvred past or over a location of interest or value a notification or indication could be provided to the user. Examples of such indications include audio or haptic notifications when the location of interest is approached or passed in the set of items when manipulating the position along the scrollbar.

Haptic feedback is the process of providing a tactile touch sensation to the user for a particular purpose. Often this takes the form of providing forces of vibration to the finger of a user when contacting the touch surface of touch sensitive display to indicate that a command has been acknowledged, to indicate that a touch input has been registered or to provide a notification or an event.

In a further example, if the structured list of items is particularly long, the list may be moved in relation to input on the scrollbar 510 in a varying manner. As described above, conventionally there is a set ratio of movement between the position along the scrollbar and the displayed subset of items. For example, should the user move the position along the scrollbar by a particular amount, say 50 pixels, the list itself may move 100 pixels or so. This equates to a 1:2 ratio in the movement of the finger or input object (which maps to the position along the scrollbar) versus the corresponding movement of the list.

However, if a visual indicator of the present disclosure is approached on the scrollbar 510 when the position along the scrollbar is moved, i.e. the displayed items are moved, this ratio could temporarily be varied. In some embodiments the ratio may be varied to have an inverted effect. This inverted effect could be a ratio of 2:1. This would effectively make the list move slower when compared to the movement of the position along the scrollbar when in proximity to important items in the list. Advantageously, this makes sure that users do not miss the locations of note or importance when rapidly scrolling through the list. Alternatively, the mapping of the dimensions of the gesture to the position of the scrollbar could vary, in order to have the same effect.

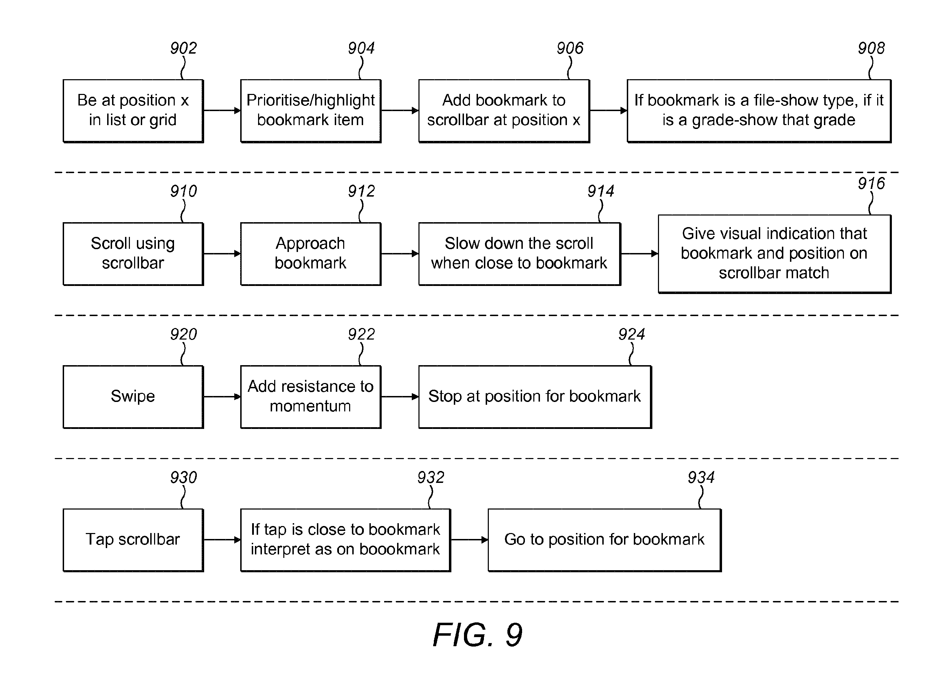

Figure 9 shows a summary flow chart of some of the examples of a bookmark indicator in accordance with the present disclosure. At step 902, the chart shows that the display is at a position x along the scrollbar, i.e. an item is displayed which is in a particular position x in the structured list of items. This item may be highlighted or marked as having a particular importance level or priority by the user (step 904). The device then creates a bookmark in the list which appears on the scrollbar 510 at this location (step 906). This bookmark can then be used in a variety of ways, some of which are described below. The bookmark at least provides an indication of an position of note in the list of items when quickly viewing the scrollbar 510. If the bookmark is a file, the file type is showed on the scrollbar 510, i.e. the visual indicator provides a representation of the file type (step 908). If the bookmark is a grade of importance, the visual indicator may provide a representation of this grade (step 908). Other visual indicators are of course considered, such as a small preview of the item.

Once a bookmark has been created, of course as described above the bookmarks may have been created by the content creator or algorithmically, the device may provide interactivity with the list of items in dependence on the bookmarks. For example, as shown at step 910, if the list of items is scrolling, as the list approaches a bookmark (step 912), the speed of scroll may decrease when in proximity to the bookmark (step 914). The visual indication of position along the scrollbar 510 may match the bookmark and the scroll may come to rest at that location in the list of items (step 916).

If a gesture is being used to control the scrolling, such as a swipe, as shown at step 920, scrolling is often performed using the momentum of the swipe, i.e. the speed and distance of the swipe. Once the gesture has finished, inertia in the scroll may allow it to carry on and retard. When approaching a bookmark in the list of items, i.e. a location of value, resistance may be provided to the momentum of the scroll (step 922). In some cases, even though the gesture indicates a scrolling past a location of value in the list, the scroll should actually stop at the location of value (step 924) and display the associated items. This allows for inaccuracies in the gesture control of the scroll. Even if the scroll indicates that a bookmark should be passed, the device knows that the scroll should stop because the bookmark indicates a location of value.

Additionally, if the device detects a tap gesture in the proximity of the scrollbar 510 displayed on the screen (step 930), the items displayed on the screen will change to those at that location in the list corresponding to the location tapped on the scrollbar 510. If the device detects that the tap is in the proximity of a bookmark indicated on the scrollbar 510 (step 932), or not indicated in some embodiments, the items displayed will be those at the location of value in the list, i.e. at the bookmark (step 934).

### Example importance indication

For the purposes of this exemplary discussion, as shown in Figure 4, the items 410 may be arranged in a grid 400 with each item having a display corresponding to a preview of the content of the item 410 in a confined rectangular space having equal dimensions by default. In a particularly preferred embodiment, the default grid is n x 2 where n is an integer. A gesture, such as a grab gesture, may expand or contract the aspect ratio of the grid 400 for accessible viewing.

Typically, a collection of notes or emails displayed in a grid require a method of prioritisation. In email applications for example, each important email may be given a label, or flagged as important, or 'starred'. This prioritisation provides a better overview of the information and also helps decide which items are important and which are not. Often the label or flag etc is abstract from the item.

When a user wants to give an item a priority, the user will often want to affect multiple items, making some more important and at the same time making others less significant. It is important that this process of organising and structuring items is intuitive and swift. If the method to effect such a prioritisation setting is hidden in a subset of complicated menus and behind complicated interaction, there is a risk that it is perceived as taking more time for the user than what is gained by having performed the prioritisation, i.e. organising and structuring the data. There is a need in the context of structured lists or grids in that there is no quick way to prioritise the individual items within the list.

The present disclosure provides a simple method for providing a item within a list with an increased or decreased level of importance or priority. In some embodiments the method employs gesture-based input. Preferably, a pinch gesture provides a decrease in the importance level of the item and a punch or un-pinch gesture provides an increase in the importance level. Advantageously, the change in priority is indicated on the display with a change in the visual style of the item.

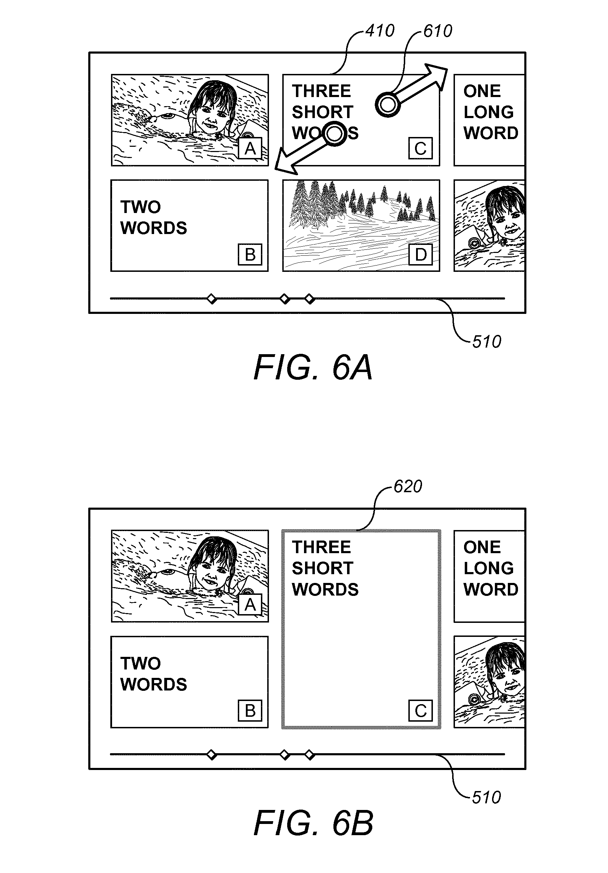

If, for example, an item 410 is made more important through the use of a punch gesture, the item 620 may grow in size on the display, as shown in Figure 6B. Figure 6A shows the default state and size of the item 410 before the gesture 610 is detected. In the context of the exemplary grid described above, the important item 620 may span both rows of the grid. In other words, the more important items will form a grid of m x 1 where m is an integer. The preview of the item, or the item itself, takes up more space in the list or grid and therefore signals its importance when it is scrolled past or viewed alongside items of lesser importance. Alternatively, the item 620 may become emboldened when the item is designated as having a higher priority. The item is easier to spot than with known methods because it is a readily apparent characteristic of the visual appearance of the item itself that is changed to reflect its importance.

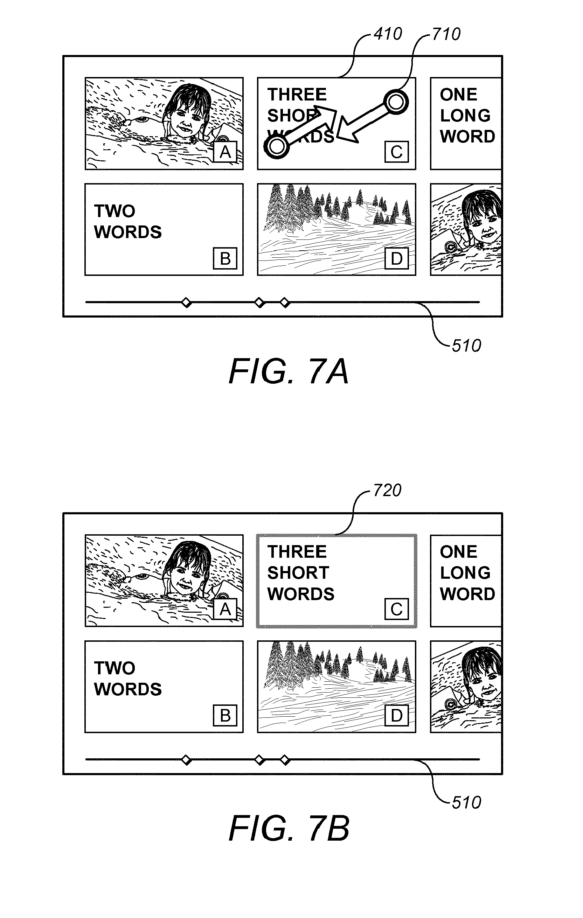

In contrast, if an item is made less important through the use of a pinch gesture, the item 720 could decrease in size, as shown in Figure 7B. Figure 7B shows the gesture being detected on the item 410 before the change in importance is recognised and effected. Due to the structure of a list or a grid the decrease in size is limited. When the item 720 is designated as of lower importance, the opacity could also be affected to make the item more transparent or 'greyed out'. Any combination of the above could of course be effected.

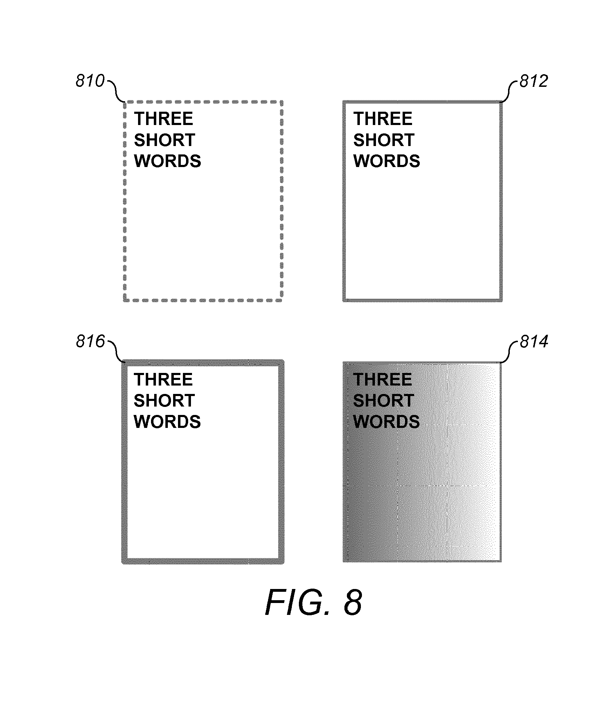

Figure 8 shows further examples of the change in representation of the item 410 when a gesture has been detected and the importance level is recognised as to be changed. For example, the border of the item 810 could be dotted, the opacity of the item 812 could be reduced, the border of the item 816 could be emboldened or the background of the item 814 could be shaded with a gradient. Other representations are of course envisaged.

Figure 8 also illustrates how the item 410 appears once it has increased in size. In the examples shown in Figure 8, while the size of the rectangle has increased, the size of the heading of the item remains the same. This shows that the expansion of the item 410 is not necessarily an enlargement of item as a whole, but a resizing of certain aspects of it. Once the item has expanded the heading may remain the same size, as shown in Figure 8, or it may enlarge to fill the newly created space or reposition itself to another part of the enlarged item, for example, near the middle. The item 410 may contain content other than the header text, such as a more detailed description, but would not be full displayed in the default-sized item 410. The detailed text may not be shown at all in the item 410 or only a snippet of the text may be displayed. If the item 410 is resized, then the text may be shown in full, or at least a larger snippet of it may be shown. Similarly, where the default-sized item 410 contains an image, once the item is enlarged the image may also be resized with the item to result in a larger image. Alternatively, instead of resizing the image, more of it may be revealed by increasing the overall item size, like a reverse cropping.

As is shown in Figures 6B and 7B, when items 620, 720 are designated as having a particular importance level and are made bigger or smaller as a consequence, the grid rearranges the surrounding items in order to keep the structure of a grid.

It is possible when the grid items 410 are small in size or densely spaced that when a gesture is detected, it may be ambiguous as to which grid item has been designated with a particular importance level. To overcome this scenario, rather than identify the grid item in which the gesture begins, the centre of the pinch or punch gesture 610, 710 is identified. The grid item 410 present at this location is then designated as having an importance level in accordance with the gesture used. A threshold level may be used when calculating the centre point to account for any errors.

When the grid of items 400 is displayed to the user, it may be advantageous to provide for advanced editing quickly and easily. To effect this, a gesture is used to enter an advanced editing mode, in which the keypad may be displayed. A suitable gesture is a vertical swipe in a downward direction. Other gestures are of course envisaged. A vertical swipe may, in some embodiments, be used to effect a change in priority of the item rather than opening the item. For example, an upward swipe may increase the importance level and a downward swipe may decrease the importance level or vice versa.

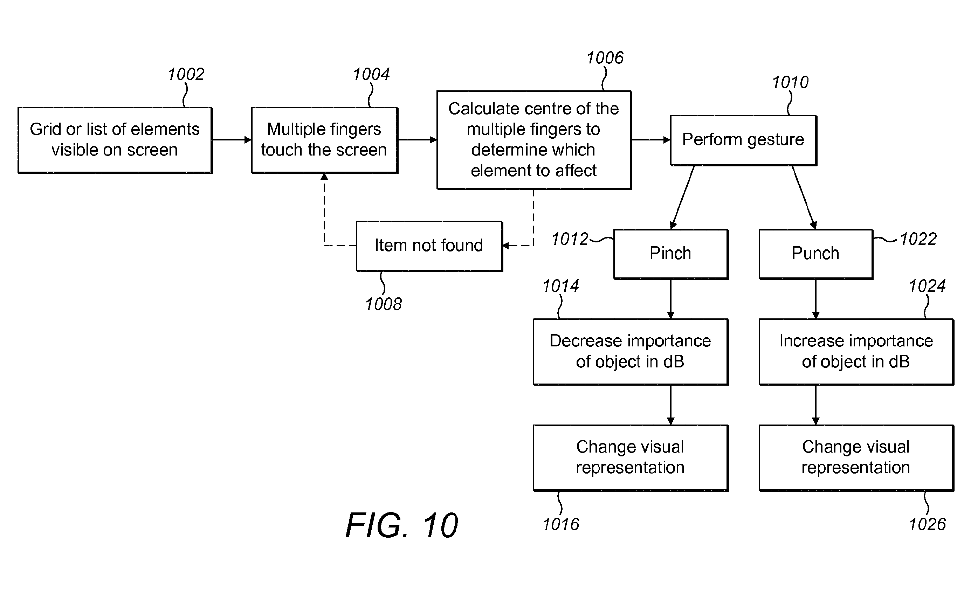

Figure 10 shows a flow chart of the process of emphasising an item using a gesture. At step 1002, the grid or list of elements is displayed on the GUI and is visible to the user. The device then detects that multiple touch events have occurred, i.e. multiple fingers touching the screen (step 1004). As described above, the device may then calculate the centre of the touch event (step 1006), i.e. the gesture, in order to determine which item should be affected by the gesture. If no item is found in proximity to the centre of the gesture, no change is effected (step 1008). The device then detects which gesture has been performed by the user (step 1010). If the gesture is a pinch gesture (step 1012), the importance of the object is decreased in the database (step 1014). If the level cannot decrease anymore, i.e. the amount of levels has run out, the importance level is not changed (not shown). The visual representation of the object on the display is in accordance with the importance of the object indicated in the database. Therefore, since the importance has been changed, the visual representation will also change (step 1016). In the specific example above, the object will be made smaller.

If, instead of a pinch gesture a punch gesture is detected (step 1022), the importance of the object is increased in the database (step 1024). If the level cannot increase anymore, i.e. the amount of levels has run out or reached a maximum or minimum level, the importance level is not changed (not shown). The visual representation of the object on the display is in accordance with the importance of the object indicated in the database. Therefore, since the importance has been changed, the visual representation will also change (step 1026). In the specific example above, the object will be made larger.

It is stated above that the item 410 in the grid may be a preview of the content of the item. When the importance of the item is changed, for example enlarged, the display of the item may vary. For example, when an item has a standard importance or priority, it may have a display representative of its type and only when it is enlarged is a preview displayed. In another example, an embedded photo may only be displayed when the item is made more important. Other examples are contemplated, but the principle of having a differing display for each importance level applies.

Of course as mentioned above, once an item 620, 720 has been given a particular level of importance, the item may be represented in the scrollbar 510 with a visual indicator representative of that item in accordance with one or more embodiments of the present disclosure.

### Example note compiler

One of the key uses of portable electronic devices is to take notes on the fly, i.e. taking notes whilst travelling or away from a desk or fixed location. For example, a portable device user could be taking notes during a meeting or simply 'scribbling' down thoughts on their own. It has been shown that when using devices with limited text-inputs and limited screen sizes, such as tablet computers or touch screen smartphones, it is cumbersome to make notes with rich content and formatting. Typically, users would use desktop PCs for this purpose, often making simple notes on the portable device to be supplemented at a later date on a more comprehensive computer.

### Example photo note compiler

Within the items grid 400, it would be beneficial to the user if it were possible to supplement or create a note based on an alternative form of media. As shown in Figure 5, when editing an item from the grid, a photo could be taken 1110. Other examples of alternative media include sound recordings and video capture. In accordance with the present disclosure, a photo taken by the camera when in the notes application may be supplemented with text 1112, or vice versa. The subsequently created note 1114 may then be added to the grid of items.

While the present disclosure is primarily described in terms of methods, a person of ordinary skill in the art will understand that the present disclosure is also directed to various apparatus such as a handheld electronic device including components for performing at least some of the aspects and features of the described methods, be it by way of hardware components, software or any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the described methods. It is understood that such apparatus, articles of manufacture, and computer data signals also come within the scope of the present disclosure.

The term "computer readable medium" as used herein means any medium which can store instructions for use by or execution by a computer or other computing device including, but not limited to, a portable computer diskette, a hard disk drive (HDD), a random access memory (RAM), a read-only memory (ROM), an erasable programmable-read-only memory (EPROM) or flash memory, an optical disc such as a Compact Disc (CD), Digital Versatile Disc (DVD) or Blu-ray^{™} Disc, and a solid state storage device (e.g., NAND flash or synchronous dynamic RAM (SDRAM)).

Example embodiments of the present disclosure are not limited to any particular operating system, system architecture, mobile device architecture, server architecture, or computer programming language.

The various embodiments presented above are merely examples and variations of the innovations described herein will be apparent to persons of ordinary skill in the art. As embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A computer implemented method comprising, at an electronic device adapted to receive user input and having a display:
displaying a subset of a set of items in a first display area of the display;
maintaining a first marker corresponding to a position of the currently displayed subset within the set of items;
receiving user input to navigate through the set of items;
receiving a user initiated indication of an item within the set of items to be allocated a marker;
maintaining a second marker corresponding to the position of the indicated item within the set of items; and,
notifying the user of the position of the indicated item during subsequent navigation through the set of items.

2. The method of claim 1, wherein notifying comprises displaying the second marker in a second display area of the display.

3. The method of claim 2, wherein notifying further comprises displaying the first marker in the second display area of the display.

4. The method of any preceding claim, wherein notifying comprises providing a non-visual indicator as the first marker approaches the position of the second marker during navigation.

5. The method of claim 4, wherein the non-visual indication comprises at least one of an audible sound and haptic feedback.

6. The method of any preceding claim, further comprising:
displaying, in a second display area of said display, a visual representation of at least a plurality of items in the set of items, including the subset of items currently displayed, said visual representation having a physical extent representing said at least a plurality of items; and,
displaying on the visual representation the first and second markers corresponding, respectively, to the position of the currently displayed subset and the position of the indicated item within the set of items on the visual representation.

7. The method of claim 6, wherein the visual representation is a scroll bar.

8. The method of any preceding claim, further comprising:
receiving user input selecting the second marker;
navigating to the item associated with the second marker; and,
displaying a subset of items from the set of items, said subset of items including the item associated with the second marker.

9. The method of claim 8, wherein the user input is a gesture on a touch pad, such as a touch-sensitive display, of the electronic device.

10. The method of any of claims 6 to 9, wherein the method comprises displaying a plurality of markers on the visual representation at positions corresponding to positions within the set of items of a plurality of items in the list.

11. The method of claim 10, wherein said plurality of items comprises items in the set which are at least one of:
(i) associated with a higher importance than other items in the list;
(ii) assigned a favourite status; and,
(iii) associated with a particular module of the device.

12. The method of any of claims 6 to 11, further comprising:
receiving a user input to navigate through the set of items, said user input comprising a gesture which comprises a movement across at least a portion of an input region;
associating said movement gesture with a translational movement of the first marker along the visual representation to a new position;
adjusting the amount of translational movement of the first marker along the visual representation according to a separation of the first and second markers; and,
displaying another subset of items from the set of items corresponding to the new position of the first marker.

13. The method of claim 12, wherein the amount of translational movement of the first marker along the visual representation is determined by a characteristic of said gesture.

14. The method of claim 13, wherein said characteristic is a physical extent of said movement gesture or a speed of said movement gesture.

15. The method of any of claims 12 to 14, wherein said movement gesture corresponds to a first proportion of the physical extent of said visual representation and said translational movement of said first marker corresponds to a second proportion of the physical extent of said visual representation, said second proportion being different than said first proportion.

16. The method of claim 15, wherein, if the separation of the first and second markers on the visual representation is less than a predetermined proportion of the physical extent of the visual representation, said second proportion is less than said first proportion.

17. The method of claim 16, wherein said second proportion is less than or equal to half of said first proportion.

18. The method of claim 15, wherein, if the separation of the first and second markers on the visual representation is greater than a predetermined proportion of the physical extent of the visual representation, said second proportion is greater than said first proportion.

19. The method of claim 18, wherein said second proportion is greater than or equal to twice said first proportion.

20. An electronic device comprising:
a display;
an input device for receiving user input;
one or more processors; and,
memory comprising instructions which when executed by one or more of the processors cause the electronic device to perform the method of any claims 1 to 19.

21. A computer program product comprising memory comprising instructions which when executed by one or more of the processors of an electronic device adapted to receive user input and having a display cause the electronic device to perform the method of any claims 1 to 19.
